# EUROPÄISCHE PATENTSCHRIFT

(11) **EP 1 929 748 B1**
(45) Veröffentlichungstag und Bekanntmachung des Hinweises auf die Patenterteilung: **10.10.2012**
(21) Anmeldenummer: 06778352.2
(22) Anmeldetag: 24.08.2006
(51) Int. Cl.: H04L 29/08

(54) **ABWESENHEITSASSISTENZSYSTEM FÜR MULTIMEDIAFÄHIGE KOMMUNIKATIONSSYSTEME**
ABSENCE ASSISTANCE SYSTEM FOR MULTIMEDIA-ENABLED COMMUNICATION SYSTEMS
SYSTEME D'AIDE EN CAS D'ABSENCE POUR DES SYSTEMES DE COMMUNICATION MULTIMEDIA

(30) Priorität: 28.09.2005 DE 102005046441
(43) Veröffentlichungstag der Anmeldung: 11.06.2008
(73) Patentinhaber: Siemens Enterprise Communications GmbH & Co. KG, 81379 München (DE)
(72) Erfinder: BORDEWISCH, Uwe, 32351 Stemwede-Wehdem (DE); HOFFMANN, Holger, 58239 Schwerte (DE); LEIMKÖTTER, Ulrich, 45889 Gelsenkirchen (DE)
(74) Vertreter: Fritzsche, Thomas
(86) Internationale Anmeldenummer: PCT/EP2006/065630
(87) Internationale Veröffentlichungsnummer: WO 2007/036403

(56) Entgegenhaltungen:
- EP-A2- 1 109 391
- WO-A-2005/050952
- SINGH K ET AL: "Peer-to-Peer Internet Telephony using SIP" INTERNET CITATION, [Online] 31. Oktober 2004 (2004-10-31), XP002336408 Gefunden im Internet: URL:http://www1.cs.columbia.edu/ library/TR-repository/reports/reports-20 04/cucs-044-04.pdf> [gefunden am 2005-07-18]
- MATTHEWS NIMCAT NETWORKS B POUSTCHI NIMCAT NETWORKS P: "Industrial-Strength P2P SIP" 11. Februar 2005 (2005-02-11), IETF STANDARD-WORKING-DRAFT, INTERNET ENGINEERING TASK FORCE, IETF, CH , XP015032234 ISSN: 0000-0004 das ganze Dokument

## Beschreibung

Die Erfindung betrifft ein Abwesenheitsassistenzsystem für wenigstens ein aus mehreren paketorientierten Clientkommunikationssystemen bestehendes Kommunikationssystem, wobei die paketorientierten Clientkommunikationssysteme zumindest teilweise unterschiedliche Multimediadienste unterstützen. Ferner ist zumindest einem Kommunikationsteilnehmer jeweils zumindest ein Multimediadienst eines paketorientierten Clientkommunikationssystems zugeordnet.

Bisherige Abwesenheitsassistenzsysteme weisen eine zentrale Abwesenheitsassistenzeinheit, beispielsweise eine zentral innerhalb eines Kommunikationssystems angeordnete "Voicemail"-Servereinheit, auf, über welche eine medienspezifische Verwaltung, beispielsweise von Sprachdiensten, der in der Abwesenheit des betroffenen Kommunikationsteilnehmers eingehenden multimedialen Kommunikationsverbindungen erfolgt. Derartige zentrale Ansätze sind jedoch technisch aufwendig und erfordern kostenintensive Servereinheiten, die aufgrund der zentralen Anordnung im Kommunikationssystem einen die Leistung begrenzenden Flaschenhals ausbilden können.

Multimediafähige Kommunikationssysteme unterstützen jeweils einen oder mehrere Multimediadienste, die eine Multimediakommunikation, d.h. den Aufbau von multimedialen Kommunikationsverbindungen über unterschiedliche Medienübertragungskanäle ermöglichen. Als Beispiel für derartige Multimediadienste seien an dieser Stelle Sprachdienste, Datendienste, Audiodienste, Videodienste, Informationsdienste und Programmkommunikationsdienste genannt.

Die unterschiedlichen Multimediadienste werden üblicherweise mit Hilfe von spezifischen Kommunikationsprotokollen realisiert. Die Bereitstellung derartiger Multimediadienste stellt aufgrund der hohen Datendurchsatzraten sowie der erforderlichen Speicherkapazitäten hohe Anforderungen an die Leistungsfähigkeit der entsprechenden Kommunikationseinrichtungen, insbesondere deren Abwesenheitsassistenzsysteme.

Ferner sind "Peer-to-Peer" Kommunikationsnetzwerke bekannt, bei denen die Datenkommunikation gemäß dem "Peer-to-Peer-Übertragungsprotokoll erfolgt. Im Gegensatz zu "Client/Server" Architekturen kann in einem auf der Peer-to-Peer-Technologie basierenden Kommunikationsnetzwerk jedes Computersystem ein "Peer" ("Gleichgestellter") sein, welches gleichzeitig als Client und Server fungieren kann. Ein Peer-to-Peer Kommunikationsnetzwerk kann hierbei auf zwei Arten realisiert sein, und zwar als reines oder hybrides "Peer-to-Peer" Kommunikationsnetzwerk. Die "reine" Variante besitzt keinerlei zentralisierte Instanzen wohingegen beim "hybriden" Ansatz im Kommunikationssystem eine (oder eine geringe Zahl gekoppelter) Verzeichnisservereinheiten vorgesehen sind, die einen zusätzlichen Vermittlungsdienst bereitstellen.
EP 1 109 391 A2 zeigt Nachrichtenaufnahmesysteme an einem Datennetzwerk, die jeweils über ein Kommunikationssystem zu Sätzen von Kommunikationsendgeräten verzweigen.
WO 2005/050925 A1 zeigt eine skalierbare Implementierung von TCP/IP-Netzwerkprotokollen.
Kundan Singh und Henning Schulzrinne schlagen in dem Artikel "Peer-to-Peer Internet Telephony using SIP" http://www1.cs.columbia.edu/∼library/TRrepository/reports/reports-2004/cucs-044-04.pdf vor, ein Peer-to-Peer-Dateispeichersystem bei Abwesenheit eines Kommunikationsteilnehmers bei Internettelefonanwendungen zu nutzen, um eine Nachricht zu speichern und für den Kommunikationsteilnehmer abrufbar bereitzustellen.

Die Aufgabe der vorliegenden Erfindung besteht darin, ein Abwesenheitsassistenzsystem für ein multimediafähiges Kommunikationssystem anzugeben, bei dem die in der Abwesenheit eines Kommunikationsteilnehmers an diesen gerichteten multimedialen Kommunikationsverbindungen unterschiedlicher Ausprägung ressourcenschonend und effizient verwaltet werden. Die Aufgabe wird erfindungsgemäß ausgehend von dem Oberbegriff des Patentanspruches 1 durch dessen kennzeichnende Merkmale gelöst.

Ein Aspekt des erfindungsgemäßen Abwesenheitsassistenzsystems besteht darin, dass die paketorientierten Clientkommunikationssysteme über ein Peer-to-Peer-Übertragungsprotokoll miteinander verbunden sind. Das Abwesenheitsassistenzsystem weist ferner in jeweils einem paketorientierten Clientkommunikationssystem zumindest eine Abwesenheitsassistenzeinheit auf, die in der Abwesenheit eines Kommunikationsteilnehmers die über den zumindest einen dem Kommunikationsteilnehmer zugeordneten Multimediadienst an den abwesenden Kommunikationsteilnehmer gerichtete Kommunikationsverbindungen verwaltet. Vorteilhaft wird somit ein zentrales Abwesenheitsassistenzsystem für eine Vielzahl von Kommunikationsteilnehmern innerhalb eines multimediafähigen Kommunikationssystems, beispielsweise einer privaten Nebenstellenanlage, durch einzelne in den paketorientierten Clientkommunikationseinheiten vorgesehenen Abwesenheitsassistenzeinheiten ersetzt, welche lokal die Verwaltung der in der Abwesenheit eines Kommunikationsteilnehmers über dessen zugeordnete Multimediadienste ankommenden Kommunikationsverbindungen übernehmen. Über einen derartigen dezentralen Ansatz der Verwaltung der multimedialen Kommunikationsverbindungen in der Abwesenheit eines Kommunikationsteilnehmers innerhalb eines aus mehreren Clientkommunikationssystemen, beispielsweise einem Local Area Network oder einem Wireless Local Area Network, können die in diesen verfügbaren Multimediaressourcen zur Speicherung und Übertragung der empfangenen Multimediadaten effektiv genutzt werden.

In einer weiteren vorteilhaften Ausgestaltung weist das Abwesenheitsassistenzsystem eine so genannte Peer-to-Peer-Datenbasis auf, welche redundant ausgebildet ist und verteilt innerhalb des multimediafähigen Kommunikationssystems angeordnet ist. Insbesondere sind in den jeweiligen Clientkommunikationssystemen zumindest den Abwesenheitsassistenzeinheiten und der zumindest einen Gatewayeinheit Peer-to-Peer-Datenbankeinheiten zugeordnet.

Weiterhin vorteilhaft weist jeweils eine Abwesenheitsassistenzeinheit zumindest eine Suchanfragefunktionalität auf, über welche zur Verfügung stehende Multimediaressourcen in den benachbarten Clientkommunikationssystemen ermittelt werden können.

Die Erfindung wird im Folgenden anhand eines schematischen Blockschaltbildes an einem Ausführungsbeispiel näher erläutert.

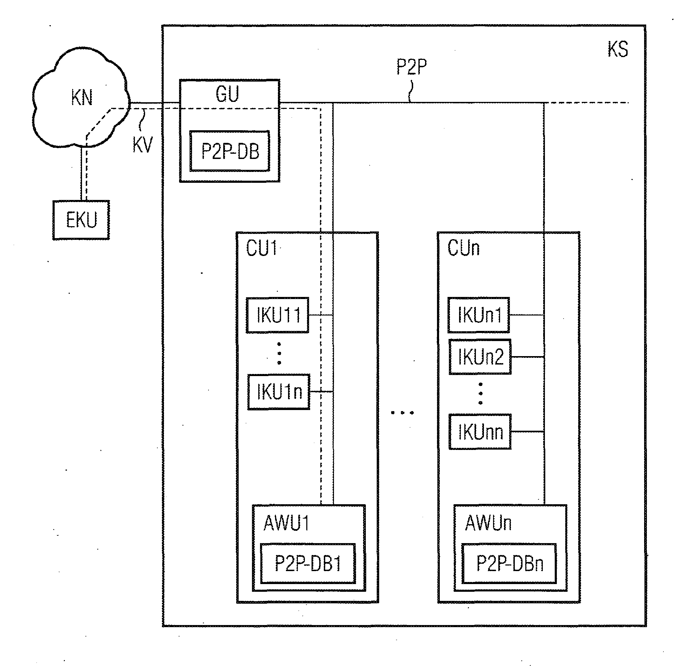

In der Figur ist beispielhaft ein multimediafähiges Kommunikationssystem KS, z. B. eine private Nebenstellenanlage für beispielsweise bis zu 100 Kommunikationsteilnehmer, schematisch dargestellt, dass beispielsweise über eine Gatewayeinheit GU an ein Kommunikationsnetz KN, z.B. ein öffentliches Kommunikationsnetz, angekoppelt ist.

Das Kommunikationsnetz KN basiert überlicherweise auf einer zeitschlitzorientierten oder paketorientierten Übertragungstechnologie. Das multimediafähige Kommunikationssystem KS weist vorzugsweise eine paketorientierte Übertragungstechnologie auf. Hierzu wird innerhalb des multimediafähigen Kommunikationssystems KS eine beispielsweise multimediale Kommunikationsverbindung KV durch ein wechselseitiges Senden und Empfangen von - Nutz- und/oder Signalisierungsinformationen enthaltenden - Datenpaketen zwischen einem ersten und einem zweiten Kommunikationsendgerät realisiert. Die einzelnen Datenpakete enthalten u.a. Informationen über die Zieladresse des jeweils anderen Kommunikationsendgerätes.

Zur Bestimmung des Leitwegs innerhalb des paketorientierten multimediafähigen Kommunikationssystems KS - auch "Routing" genannt - ist die Gatewayeinheit GU vorgesehen, die neben der Leitwegbestimmung von Signalisierungsdaten enthaltenden Datenpaketen auch zur Leitwegbestimmung von Nutzdaten enthaltenden Datenpaketen, insbesondere von Multimediadaten enthaltenden Datenpaketen ausgebildet ist. Insbesondere weist die Gatewayeinheit GU Mittel zur Umsetzung von aus dem Kommunikationsnetz KN empfangenen Datenströmen in geeignete Datenpakete und vice versa auf. Die zur Umsetzung erforderlichen Informationen sind in einer in der Gatewayeinheit GU vorgesehenen Peer-to-Peer-Datenbasis P2P-DB gespeichert.

Das multimediafähige Kommunikationssystem KS weist mehrere paketorientierte Clientkommunikationssysteme CU1 - CUn auf, die jeweils zumindest teilweise unterschiedliche Multimediadienste unterstützen und über ein Peer-to-Peer-Übertragungsprotokoll P2P miteinander verbunden sind. Die Gatewayeinheit GU steht ebenfalls über das Peer-to-Peer-Übertragungsprotokoll P2P mit den paketorientierten Clientkommunikationssystemen CU1 - CUn in Verbindung.

Durch das Peer-to-Peer-Übertragungsprotokoll P2P sind sämtliche im multimediafähigen Kommunikationssystem KS vorgesehene Clientkommunikationssysteme CU1 - CUn gleichberechtigt und können sowohl Multimediadienste in Anspruch nehmen als auch Multimediadienste zur Verfügung stellen. Im Gegensatz zur Client-Server-Technologie kann in einem auf der Peer-to-Peer-Technologie basierenden Kommunikationssystem KS jedes paketorientierte Clientkommunikationssystem CU1 - CUn ein "Peer" ("Gleichgestellter") sein, welches in einem Kommunikationssystem KS gleichzeitig als Client und Server fungieren kann.

Die paketorientierten Clientkommunikationssysteme CU1 - CUn können hierbei einen unterschiedlichen technischen Aufbau aufweisen. Beispielsweise können diese als ein Local Area Network oder als Wireless Local Area Network ausgebildet sein. Somit bilden die paketorientierten Clientkommunikationssysteme CU1 - CUn kleine eigenständige paketorientierte Kommunikationssysteme aus, welche miteinander vernetzte interne clientspezifische Kommunikationsendgeräte IKU11 - IKU1n, IKUn1 - IKUnn und beispielsweise eine oder mehrere Peer-to-Peer-Datenbankeinheiten P2P-DB1 - P2P-DBn aufweisen.

Die internen clientspezifischen Kommunikationsendgeräte IKU11 IKUnn, IKUn1 - IKUnn können als leitungsgebundene oder mobile Endgeräte realisiert sein, beispielsweise Sprach- und/oder Videotelefone, Computereinheiten, Faxgeräte, Schnurlostelefone, Druckereinheiten etc.. Diese unterstützen jeweils unterschiedliche Multimediadienste, beispielsweise Sprachdienste, Audiodienste, Videodienste, Informationsdienste, Datendienste oder Steuerdienste.

Ferner ist zumindest ein externes multimediafähiges Kommunikationsendgerät EKU an das Kommunikationsnetz KN angeschlossen. Zwischen dem externen multimediafähigen Kommunikationsendgerät EKU und zumindest einem internen clientspezifischen Kommunikationsendgerät IKU11 werden über das Kommunikationsnetz KN sowie die Gatewayeinheit GU beispielsweise multimediale Kommunikationsverbindung KV aufgebaut, zur deren Datenübertragung ein oder mehrere Multimediadienste erforderlich sind. Beispielsweise kann von dem externen multimediafähigen Kommunikationsendgerät EKU eine Videotelefonverbindung zu einem Kommunikationsteilnehmer des multimediafähigen Kommunikationssystems KS aufgebaut werden, welche die Bereitstellung eines Videodatendienstes erfordert.

Innerhalb des multimediafähigen Kommunikationssystems KS ist jeweils einem Kommunikationsteilnehmer zumindest ein Multimediadienst zugeordnet, welcher vorzugsweise durch ein vorgegebenes paketorientiertes Clientkommunikationssystem CU1 - CUn unterstützt wird. Ein Kommunikationsteilnehmer kann innerhalb des multimediafähigen Kommunikationssystems KS somit über in unterschiedlichen paketorientierten Clientkommunikationssystemen CU1 - CUn angeordnete interne multimediafähige Kommunikationsendgeräte IKU11 - IKU1n, IKUn1 - IKUnn mehrere Multimediadienste in Anspruch nehmen, welche vorzugsweise über ein paketorientierten Clientkommunikationssystemen CU1 - CUn verwaltet werden.

Das multimediafähige Kommunikationssystem KS weist erfindungsgemäß zur Verwaltung der Multimediadienste eines Kommunikationsteilnehmers in dessen Abwesenheit ein Abwesenheitsassistenzsystem bestehend aus mehreren Abwesenheitsassistenzeinheiten AWU1 - AWUn auf, welche jeweils in den paketorientierten Clientkommunikationssysteme CU1 - CUn zur Verwaltung der in der Abwesenheit eines Kommunikationsteilnehmers empfangenen Kommunikationsverbindungen, beispielsweise Telefonanrufe, Videotelefonate oder Informationsdienste, vorgesehen sind. Den in den paketorientierten Clientkommunikationssysteme CU1 - CUn vorgesehenen Abwesenheitsassistenzeinheiten AWU1 - AWUn ist jeweils zumindest eine Peer-to-Peer-Datenbankeinheit P2P-DB1 - P2P-DBn zugeordnet, in der die zur Behandlung eines an einen Kommunikationsteilnehmer gerichteten Kommunikationsverbindung KV in dessen Abwesenheit anzuwendenden Kriterien teilnehmerspezifisch gespeichert sind.

Die gesamte Peer-to-Peer-Datenbasis P2P-DB, P2P-DB1 - P2P-DBn des multimediafähigen Kommunikationssystem KS setzt sich somit aus den in den Clientkommunikationssysteme CU1 - CUn vorgesehenen Peer-to-Peer-Datenbankeinheiten P2P-DB1 - P2P-DBn sowie der in der Gateway-Einheit GU vorgesehenen Peer-to-Peer-Datenbasis P2P-DB zusammen.

Mittels der Abwesenheitsassistenzeinheiten AWU1 - AWUn werden die in den Clientkommunikationssystemen CU1 - CUn empfangen multimedialen Kommunikationsverbindungen KV zumindest eines Kommunikationsteilnehmers hinsichtlich Medientyp und verfügbaren Mediendienstressourcen verwaltet, insbesondere können mittels einer in der jeweiligen Abwesenheitsassistenzeinheit AWU1 - AWUn implementierten Suchfunktionalität zusätzliche in den benachbarten Clientkommunikationssystemen CU1 - CUn verfügbaren Mediendienste bzw. Mediendienstressourcen ermittelt und einer empfangenen multimedialen Kommunikationsverbindung KV zugeordnet werden.

Zur Aktivierung des Abwesenheitsassistenten meldet sich ein Kommunikationsteilnehmer über ein internes Kommunikationsendgerät IKU11 - IKU1n, IKUn1 - IKUnn in einer beliebigen Abwesenheitsassistenzeinheit AWU1 - AWUn der Clientkommunikationssysteme CU1 - CUn an und legt damit das für die Verwaltung seiner multimedialen Kommunikationsverbindungen KV zuständige Clientkommunikationssystem CU1 - CUn bzw. dessen jeweilige Abwesenheitsassistenzeinheit AWU1 - AWUn fest. Die Netzadresse des zugeordneten Clientkommunikationssystems CU1 wird in der Peer-to-Peer-Datenbasis P2P-DB, P2P-DB1 - P2P-DBn des multimediafähigen Kommunikationssystems KS gespeichert. In einer bevorzugten Ausführungsform meldet sich der Kommunikationsteilnehmer durch Eingabe eines Login, beispielsweise einer UserID und eines Passwortes am multimediafähigen Kommunikationssystem KS an. Welches Clientkommunikationssystem CU1 - CUn zur Verwaltung seiner Multimediadaten in seiner Abwesenheit vorgesehen ist, ist für Ihn nicht transparent.

Anschließend werden über die Abwesenheitsassistenzeinheit AWU1 - AWUn des zugeordneten Clientkommunikationssystems CU1 - CUn automatisch die im lokalen Clientkommunikationssystems CU1 verfügbaren Multimediadienste ermittelt und darüber hinaus innerhalb des multimediafähigen Kommunikationssystems KS eine Suchanfrage in den weiteren Abwesenheitsassistenzeinheit AWU2 - AWUn der benachbarten Clientkommunikationssystemen CU2 - CUn initiiert, welche die in den benachbarten Clientkommunikationssystemen CU2 - CUn verfügbaren Backupressourcen bzw. Ersatzressourcen ermitteln und an die initiierende Abwesenheitsassistenzeinheit AWU1 das Suchergebnis beispielsweise in Form der Netzadressen der Backupressourcen bzw. Ersatzressourcen zurückmelden. Die lokal verfügbaren Multimediadienste sowie die Netzadressen der rückgemeldeten Backupressourcen bzw. Ersatzressourcen werden in der der initiierenden Abwesenheitsassistenzeinheit AWU1 zugeordneten Peer-to-Peer-Datenbankeinheit P2P-DB1 abgespeichert.

Werden keine verfügbaren Backupressourcen bzw. Ersatzressourcen ermittelt, so erfolgt eine Benachrichtigung des Kommunikationsteilnehmers oder ggf. des Systemadministrators, der eine entsprechende Erweiterung des multimediafähigen Kommunikationssystems KS einleiten kann.

Bei einer an den abwesenden Kommunikationsteilnehmer gerichteten multimedialen Kommunikationsverbindung KV, beispielsweise eines Videotelefonats von einem externen Kommunikationsendgerät EKU in das multimediafähige Kommunikationssystem KS, wird durch die Gatewayeinheit GU unter Auswertung der in der gesamten Peer-to-Peer-Datenbasis P2P-DB, P2P-DB1 - P2P-DBn gespeicherten Informationen zunächst das zur Verwaltung des Kommunikationsverkehrs des abwesenden Kommunikationsteilnehmers vorgesehene Clientkommunikationssystem CU1 - CUn bzw. die dieser zugeordnete Abwesenheitsassistenzeinheit AWU1 - AWUn über die gespeicherte Netzadresse ermittelt und anschließend die eingehende multimediale Kommunikationsverbindung KV an das ermittelte Clientkommunikationssystem CU1 bzw. die dieser zugeordnete Abwesenheitsassistenzeinheit AWU1 weitergeleitet, in welcher eine Weiterverarbeitung und/oder Speicherung der empfangenen Multimediadaten dienstespezifisch gemäß den durch den Kommunikationsteilnehmer vorgegebenen Kriterien erfolgt.

Bei einem Ausfall des zugeordneten Clientkommunikationssystems CU1 werden die entsprechenden, ebenfalls in der gesamten Peer-to-Peer-Datenbasis P2P-DB, P2P-DB1 - P2P-DBn gespeicherten Netzadressen der Backupressourcen bzw. Ersatzressourcen ermittelt und die eingehenden multimedialen Kommunikationsverbindungen KV an diese weitergeleitet.

Nach der erneuten Inbetriebnahme des ausgefallenen Clientkommunikationssystems CU1 werden die während des Ausfalls eines Clientkommunikationssystems CU1 in den Backupressourcen gespeicherten Multimediadaten automatisch an die zuständige Abwesenheitsassistenzeinheit AWU1 übermittelt oder nach der Anmeldung des Teilnehmers beispielsweise an einem weiteren Clientkommunikationssystem CUn an die dieser zugeordnete Abwesenheitsassistenzeinheit AWUn übergeben.

Erfordert die empfangene multimediale Kommunikationsverbindung KV einen Multimediadienst, beispielsweise einen für eine Videodatenverbindung erforderlicher Videodienst, und ist dieser in dem dem angerufenen Kommunikationsteilnehmer zugeordneten Clientkommunikationssystem CU1 nicht verfügbar, so erfolgt ein Rerouting beispielsweise des für die Videodatenverbindung erforderlichen Videokanales auf ein weiteres Clientkommunikationssystem CUn, welches den erforderlichen Multimediadienst unterstützt und noch freie Multimediadienstressourcen aufweist. Beispielsweise kann bei einem fehlenden Videodienst durch ein in dem weitere Clientkommunikationssystem CUn vorgesehene systemspezifischen Standardparametersatz, beispielsweise ein Einspielen eines Firmenlogos in den zu dieser aufgebautem Videokanal, erfolgen.

Ausgehend von dem beschriebenen Ausführungsbeispiel ermöglicht die Aufteilung von Abwesenheitsassistenzfunktionalitäten auf einzelne innerhalb der Clientkommunikationssystem CU1 - CUn vorgesehene Abwesenheitsassistenzeinheiten AWU1 - AWUn eine einheitliche Außendarstellung des multimediafähigen Kommunikationssystem KS an den anrufenden externen Kommunikationsteilnehmer.

Als Abwesenheitsassistenzeinheiten AWU1 - AWUn können beispielsweise ausgewählte interne Kommunikationsendgeräte IKU11 -IKU1n, IKUn1 - IKUnn fungieren, welche hierfür speziell eingerichtet werden.

Ferner können durch den Kommunikationsteilnehmer die jeweils in seiner Abwesenheit zu verwaltenden Multimediadienste und/oder die hierzu vorzusehenden Kommunikationsendgeräte ausgewählt werden.

Vorteilhaft werden die innerhalb des erfindungsgemäßen multimediafähigen Kommunikationssystem KS vorhandenen Multimediaressourcen einer Vielzahl von Teilnehmern zur Verfügung gestellt und damit effizienter eingesetzt.

Die Erfindung wurde voranstehend an einem Ausführungsbeispiels beschrieben. Es versteht sich, dass zahlreiche Änderungen sowie Abwandlungen möglich sind, ohne dass dadurch der der Erfindung zugrundeliegende Erfindungsgedanke verlassen wird.

## Patentansprüche

1. Abwesenheitsassistenzsystem für wenigstens ein aus mehreren paketorientierten Clientkommunikationssystemen (CU1-CUn) bestehendes multimediafähiges Kommunikationssystem (KS), wobei die paketorientierten Clientkommunikationssysteme (CU1-CUn) zumindest teilweise unterschiedliche Multimediadienste unterstützen, und bei dem zumindest einem Kommunikationsteilnehmer jeweils zumindest ein Multimediadienst eines paketorientierten Clientkommunikationssystems (CU1-CUn) zugeordnet ist, wobei die paketorientierten Clientkommunikationssysteme (CU1-CUn) über ein Peer-to-Peer-Übertragungsprotokoll (P2P) miteinander verbunden sind und **dadurch gekennzeichnet, dass** in jeweils einem paketorientierten Clientkommunikationssystem (CU1-CUn) zumindest eine Abwesenheitsassistenzeinheit (AWU1-AWUn) vorgesehen ist, die in der Abwesenheit eines Kommunikationsteilnehmers über den zumindest einen zugeordneten Multimediadienst an den abwesenden Kommunikationsteilnehmer gerichtete Kommunikationsverbindungen (KV) hinsichtlich deren Medientyp und verfügbaren Mediendienstressourcen verwaltet.

2. Abwesenheitsassistenzsystem nach Anspruch 1, **dadurch gekennzeichnet, dass** die Abwesenheitsassistenzeinheiten (AWU1-AWUn) eine Funktionalität zur Suche zusätzlicher in benachbarten Clientkommunikationssystemen (CU2-CUn) verfügbarer Mediendienstressourcen und zu deren Zuordnung zu den Kommunikationsverbindungen (KV) umfassen.

3. Abwesenheitsassistentensystem nach Anspruch 1 oder 2, **dadurch gekennzeichnet, dass** die zumindest eine Abwesenheitsassistenzeinheit (AWU1-AWUn) zur Verwaltung der an den abwesenden Kommunikationsteilnehmer gerichteten multimedialen Kommunikationsverbindungen (KV) hinsichtlich deren Medientyp und/oder der zur Bereitstellung des jeweiligen Medientyps erforderlichen Multimediaressourcen, insbesondere Übertragungs- und/oder Speicherressourcen, ausgebildet ist.

4. Abwesenheitsassistenzsystem nach Anspruch 1, 2 oder 3, **dadurch gekennzeichnet, dass** die Gesamtdatenbasis des multimediafähigen Kommunikationssystems (KS) als Peer-to-Peer-Datenbasis (P2P-DB, P2P-DB1-P2P-DBn) ausgebildet ist, wobei jeder Abwesenheitsassistenzeinheit (AWU1-AWUn) zumindest eine Peer-to-Peer-Datenbankeinheit (P2P-DB1-P2P-DBn) zugeordnet ist.

5. Abwesenheitsassistenzsystem nach einem der Ansprüche 1 bis 4, **dadurch gekennzeichnet, dass** das Kommunikationssystem (KS) eine Gatewayeinheit (GU) mit zumindest einer Peer-to-Peer-Datenbank (P2P-DB) aufweist, die mit den paketorientierten Clientkommunikationssystemen (CU1-CUn) über das Peer-to-Peer-Übertragungsprotokoll (P2P) in Verbindung steht.

6. Abwesenheitsassistenzsystem nach einem der Ansprüche 1 bis 5, **dadurch gekennzeichnet, dass** die paketorientierten Clientkommunikationssysteme (CU1-CUn) jeweils interne, zumindest teilweise multimediafähige Kommunikationsendgeräte (IKU11-IKU1n, IKUn1-IKUnn) aufweisen.

7. Abwesenheitsassistentensystem nach einem der Ansprüche 1 bis 6, **dadurch gekennzeichnet, dass** durch den Kommunikationsteilnehmer das für die Verwaltung der in seiner Abwesenheit ankommenden multimedialen Kommunikationsverbindungen (KV) zuständige Clientkommunikationssystem (CU1) bzw. die zuständige Abwesenheitsassistenzeinheit (AWU1) festgelegt wird, deren Netzadresse in der zugeordneten Peer-to-Peer-Datenbankeinheit (P2P-DB 1) gespeichert wird.

8. Abwesenheitsassistentensystem nach Anspruch 7, **dadurch gekennzeichnet, dass** durch die zuständige Abwesenheitsassistenzeinheit (AWU1) die lokal im zugeordneten Clientkommunikationssystem (CU1) verfügbaren Multimediadienste ermittelt werden und zusätzlich eine Suchanfrage in den weiteren Abwesenheitsassistenzeinheiten (AWU2-AWUn) der benachbarten Clientkommunikationssysteme (CU2-CUn) initiiert wird, über die die in den benachbarten Clientkommunikationssystemen (CU2-CUn) verfügbaren Backupressourcen bzw. Ersatzressourcen ermittelt werden.

9. Abwesenheitsassistenzsystem nach Anspruch 8, **dadurch gekennzeichnet, dass** durch die weiteren Abwesenheitsassistenzeinheiten (AWU2-AWUn) eine Rückmeldung der ermittelten Backupressourcen bzw. Ersatzressourcen in Form deren Netzadressen an die initiierende Abwesenheitsassistenzeinheiten (AWU1) erfolgt und die Netzadressen der ermittelten Backupressourcen bzw. Ersatzressourcen in der Peer-to-Peer-Datenbasis (P2P-DB, P2P-DB1-P2P-DBn) gespeichert werden.

10. Abwesenheitsassistenzsystem nach einem der Ansprüche 7 bis 9, **dadurch gekennzeichnet, dass** bei einer im multimedialen Kommunikationssystem (KS) empfangenen multimedialen Kommunikationsverbindung (KV), deren Multimediadienst im zugeordneten Clientkommunikationssystem (CU1) nicht unterstützt wird, ein Rerouting des zur Behandlung des Multimediadienstes erforderlichen Medienkanals auf ein weiteres Clientkommunikationssystem (CU2-CUn) erfolgt, welches den erforderlichen Multimediadienst unterstützt und noch freie Multimediaressourcen aufweist.

11. Abwesenheitsassistenzsystem nach einem der Ansprüche 1 bis 10, **dadurch gekennzeichnet, dass** als Abwesenheitsassistenzeinheiten (AWU1-AWUn) einzelne interne Kommunikationsendgeräte (IKU11-IKU1n, IKUn1-IKUnn) vorgesehen sind.

12. Abwesenheitsassistenzsystem Kommunikationssystem nach einem der Ansprüche 1 bis 11, **dadurch gekennzeichnet, dass** durch den Kommunikationsteilnehmer die jeweils in seiner Abwesenheit zu verwaltenden Multimediadienste ausgewählt werden.

## Claims

1. Absence assistance system for at least one multimedia-enabled communication system (KS) consisting of a plurality of packet-oriented client communication systems (CU1-CUn), wherein the packet-oriented client communication systems (CU1-CUn) support at least in part different multimedia services, and in which at least one multimedia service of a packet-oriented client communication system (CU1-CUn) is in each case assigned to at least one communication subscriber, wherein the packet-oriented client communication systems (CU1-CUn) are connected to one another via a peer-to-peer transmission protocol (P2P), and **characterised in that** provided in each packet-oriented client communication system (CU1-CUn) is at least one absence assistance unit (AWU1-AWUn) which, in the absence of a communication subscriber, manages communication connections (KV) directed to the absent communication subscriber via the at least one assigned multimedia service, with regard to the media type thereof and available media service resources.

2. Absence assistance system according to claim 1, **characterised in that** the absence assistance units (AWU1-AWUn) comprise a functionality for searching for additional media service resources available in adjacent client communication systems (CU2-CUn) and for assigning these to the communication connections (KV).

3. Absence assistance system according to claim 1 or 2, **characterised in that** the at least one absence assistance unit (AWU1-AWUn) is designed to manage the multimedia communication connections (KV) directed to the absent communication subscriber with regard to the media type thereof and/or the multimedia resources required to provide the respective media type, in particular transmission and/or memory resources.

4. Absence assistance system according to claim 1, 2 or 3, **characterised in that** the entire database of the multimedia-enabled communication system (KS) is configured as a peer-to-peer database (P2P-DB, P2P-DB1-P2P-DBn), wherein at least one peer-to-peer database unit (P2P-DB1-P2P-DBn) is assigned to each absence assistance unit (AWU1-AWUn).

5. Absence assistance system according to any one of claims 1 to 4, **characterised in that** the communication system (KS) comprises a gateway unit (GU) having at least one peer-to-peer database (P2P-DB) which is connected to the packet-oriented client communication systems (CU1-CUn) via the peer-to-peer transmission protocol (P2P).

6. Absence assistance system according to any one of claims 1 to 5, **characterised in that** the packet-oriented client communication systems (CU1-CUn) each have internal, at least partially multimedia-enabled communication terminals (IKU11-IKU1n, IKUn1-IKUnn).

7. Absence assistance system according to any one of claims 1 to 6, **characterised in that** the communication subscriber stipulates the competent client communication system (CU1) for managing the multimedia communication connections (KV) arriving in his absence and/or the competent absence assistance unit (AWU1), the network address thereof being stored in the assigned peer-to-peer database unit (P2P-DB1).

8. Absence assistance system according to claim 7, **characterised in that** the competent absence assistance unit (AWU1) determines the multimedia services available locally in the assigned client communication system (CU1) and additionally initiates a search request in the further absence assistance units (AWU2-AWUn) of the adjacent client communication systems (CU2-CUn), via which the back-up resources and/or replacement resources available in the adjacent client communication systems (CU2-CUn) are determined.

9. Absence assistance system according to claim 8, **characterised in that** the determined back-up resources and/or replacement resources are reported to the initiating absence assistance unit (AWU1) by the further absence assistance units (AWU2-AWUn) in the form of the network addresses thereof, and the network addresses of the determined back-up resources and/or replacement resources are stored in the peer-to-peer database (P2P-DB, P2P-DB1-P2P-DBn).

10. Absence assistance system according to any one of claims 7 to 9, **characterised in that**, if the multimedia communication system (KS) receives a multimedia communication connection (KV) the multimedia service of which is not supported in the assigned client communication system (CU1), the media channel required to handle the multimedia service is re-routed to a further client communication system (CU2-CUn) which supports the required multimedia service and has multimedia resources that are still free.

11. Absence assistance system according to any one of claims 1 to 10, **characterised in that** individual internal communication terminals (IKU11-IKU1n, IKUn1-IKUnn) are provided as absence assistance units (AWU1-AWUn).

12. Absence assistance system according to any one of claims 1 to 11, **characterised in that** the communication subscriber selects the multimedia services to be managed in each case in his absence.

## Revendications

1. Système d'aide en cas d'absence pour au moins un système de communication (KS) multimédia constitué de plusieurs systèmes de communication client (CU1-CUn) orientés paquets, sachant que les systèmes de communication client (CU1-CUn) orientés paquets supportent au moins en partie divers services multimédias, et dans le cadre duquel respectivement au moins un service multimédia d'un système de communication client (CU1-CUn) orienté paquets est associé à au moins un abonné, sachant que les systèmes de communication client (CU1-CUn) orientés paquets sont reliés les uns aux autres par l'intermédiaire d'un protocole de transmission pair à pair (P2P), et **caractérisé en ce qu'**au moins une unité d'aide en cas d'absence (AWU1-AWUn) est prévue dans respectivement un système de communication client (CU1, CUn) orienté paquets, laquelle gère en l'absence d'un abonné, par l'intermédiaire du service multimédia associé au moins au nombre de un, des liaisons de communication (KV) adressées à l'abonné absent au regard de leur type de média et des ressources de service média disponibles.

2. Système d'aide en cas d'absence selon la revendication 1, **caractérisé en ce que** les unités d'aide en cas d'absence (AWU1-AWUn) comportent une fonctionnalité pour la recherche de ressources supplémentaires de services média disponibles dans les systèmes de communication client (CU2-CUn) voisins et pour leur attribution aux liaisons de communication (KV).

3. Système d'aide en cas d'absence selon la revendication 1 ou 2, **caractérisé en ce que** l'unité d'aide en cas d'absence (AWU1-AWUn) au moins au nombre de une est réalisée pour gérer les liaisons de communication (KV) multimédias adressées à l'abonné absent au regard de leur type de média et/ou des ressources multimédias, en particulier des ressources de transmission et/ou de stockage, nécessaires pour fournir le type de média respectif.

4. Système d'aide en cas d'absence selon la revendication 1, 2 ou 3, **caractérisé en ce que** la base de données globale du système de communication (KS) multimédia est réalisée comme une base de données pair à pair (P2P-DB, P2P-DB1-P2P-DBn), sachant qu'au moins une unité de banque de données pair à pair (P2P-DB1-P2P-DBn) est attribuée à chaque unité d'aide en cas d'absence (AWU1-AWUn).

5. Système d'aide en cas d'absence selon l'une quelconque des revendications 1 à 4, **caractérisé en ce que** le système de communication (KS) présente une unité passerelle (GU) dotée d'au moins une banque de données pair à pair (P2P-DB), qui est en relation avec les systèmes de communication client (CU1-CUn) orientés paquets par l'intermédiaire du protocole de transmission pair à pair (P2P).

6. Système d'aide en cas d'absence selon l'une quelconque des revendications 1 à 5, **caractérisé en ce que** les systèmes de communication client (CU1-CUn) orientés paquets présentent respectivement des terminaux de communication (IKU11-IKU1n, IKUn1-IKUnn) internes au moins en partie multimédias.

7. Système d'aide en cas d'absence selon l'une quelconque des revendications 1 à 6, **caractérisé en ce que** sont fixés par l'abonné, le système de communication client (CU1) ou l'unité d'aide en cas d'absence (AWU1) en charge de la gestion des liaisons de communication (KV) multimédias arrivant en l'absence de l'abonné, l'adresse réseau desquels étant stockée dans l'unité de banque de données (P2P-DB 1) pair à pair attribuée.

8. Système d'aide en cas d'absence selon la revendication 7, **caractérisé en ce que** les services multimédias disponibles localement dans le système de communication client (CU1) attribué sont déterminés par l'unité d'aide en cas d'absence (AWU1) compétente, et **en ce qu'**en plus une demande de recherche est lancée dans les diverses unités d'aide en cas d'absence (AWU2-AWUn) des systèmes de communication client (CU2-CUn) voisins, par l'intermédiaire de laquelle les ressources de sauvegarde ou les ressources de remplacement disponibles dans les systèmes de communication client (CU2-CUn) voisins sont déterminées.

9. Système d'aide en cas d'absence selon la revendication 8, **caractérisé en ce qu'**un signal en retour des ressources de sauvegarde ou des ressources de remplacement déterminées sous la forme de leurs adresses réseau adressé aux unités d'aide en cas d'absence (AWU1) à l'initiative de la demande de recherche est effectué par l'intermédiaire des autres unités d'aide en cas d'absence (AWU2-AWUn), et **en ce que** les adresses réseau des ressources de sauvegarde ou de remplacement déterminées sont stockées dans la base de données pair à pair (P2P-DB, P2P-DB1-P2P-DBn).

10. Système d'aide en cas d'absence selon l'une quelconque des revendications 7 à 9, **caractérisé en ce que** dans le cas d'une liaison de communication (KV) multimédia reçue dans le système de communication (KS) multimédia, dont le service multimédia n'est pas supporté dans le système de communication client (CU1) attribué, un réacheminement du canal de média nécessaire au traitement du service multimédia sur un autre système de communication client (CU2-CUn) a lieu, lequel supporte le service multimédia requis et présente encore des ressources multimédias libres.

11. Système d'aide en cas d'absence selon l'une quelconque des revendications 1 à 10, **caractérisé en ce que** divers terminaux de communication (IKU11-IKU1n, IKUn1-IKUnn) internes sont prévus en tant qu'unités d'aide en cas d'absence (AWU1-AWUn).

12. Système d'aide en cas d'absence selon l'une quelconque des revendications 1 à 11, **caractérisé en ce que** les services multimédias à gérer respectivement en l'absence de l'abonné sont choisis par ce dernier.
